# EUROPEAN PATENT APPLICATION

(11) **EP 4 545 901 A1**
(43) Date of publication of application: **30.04.2025**
(21) Application number: 23383101.5
(22) Date of filing: 27.10.2023
(51) Int. Cl.: G01B 11/00

(54) **APPARATUS AND METHOD FOR MEASURING A VOLUME OF A PILED MATERIAL**

(71) Applicant: Fundacion Centro de Tecnologias de Interaccion Visual y Communicaciones VICOMTECH, 20009 Donostia - San Sebastian (Guipuzcoa) (ES); Fundación Tecnalia Research and Innovation, 20009 Donostia-San Sebastian (ES)
(72) Inventor: LOYO MENDIVIL, Estíbaliz, 20009 San Sebastian, GIPUZKOA (ES); BARANDIARAN MARTIRENA, Javier, 20009 San Sebastian, GIPUZKOA (ES); IRIGOYEN GARCÍA, Eider, 20009 San Sebastian, GIPUZKOA (ES); CEJUDO FRESNADILLO, Iñaki, 20009 San Sebastian, GIPUZKOA (ES); RODRIGUEZ MIJANGOS, Maria de la O, 20009 Donostia-San Sebastián, GIPUZKOA (ES); GORROTXATEGI TXURRUKA, Jose, 20009 Donostia-San Sebastián, GIPUZKOA (ES); BENGOA GANADO, Pablo, 20009 Donostia-San Sebastián, GIPUZKOA (ES); HERVE, Pierre-Elie, 34740 Vendargues (FR)
(74) Representative: Balder IP Law, S.L.

(57) **Abstract**

An apparatus and a method for measuring a volume of a piled material (8). The apparatus comprises: a cable-driven robot (3) which comprises a movable structure (6); a controller (4) which is configured to control a movement and a positioning of the structure (6) over an area (A) according to scanning instructions; a LiDAR system (5) which is attached to said structure (6) and is configured to collect measurement data related to the piled material (8) in said area (A); a processor (7) operatively connected to the LiDAR system (5) and to the controller (4) for receiving therefrom, respectively, the measurement data and information related to the positioning of the structure (6), and the processor (7) is configured to calculate volume data concerning the volume of the piled material (8).

## Description

### TECHNICAL FIELD

The present invention relates to an apparatus for measuring a volume of a piled material. The apparatus may particularly be used for measuring the volume of piles, mounds, or heaps formed by any of stored grains, beans, seeds, particles, sand, pebbles, stones or scrap in a corresponding storage area or facility such as in a warehouse. The apparatus may be a system. The present invention is also related to a method for measuring said volume of the piled material. Said apparatus may be used for implementing said method.

### STATE OF THE ART

There are known systems and methods for measuring a volume of piled materials, such as piled grains, beans or seeds stored in warehouses. A commonly used known method involves loading the material in tracks or vessels and weighing said tracks or vessels. By knowing the respective weight of said tracks or vessels with and without the loaded material, there can be calculated the weight of the material. From said weight there can be further calculated the volume of the loaded material if the latter's density is known.

Despite its apparent simplicity said conventional known method suffers from several drawbacks. particularly the following ones. The known method involves the loading and unloading of the material which can be a labor-intensive process that costs time and resources. For example, for measuring the volume of grains stored in a medium-sized silo, it is not uncommon to have to use tens of tracks. Moreover, said conventional method may involve the transport of the material from a first facility where the material is loaded, to a second facility where the track or vessel is weighed and the material is unloaded after the weighing process, and this may further add to the costs and complexity of the overall method. In addition, the material being weighed may comprise mixed together two or more components of different densities, and this can result to the erroneous calculation of the overall material's volume with said conventional method, especially if the composition of the mixture of said components is not accurately known. More generally, the volume being calculated with said conventional method may be wrong if the density of the material being weighed is not accurately known, or if different parts of said material has different densities, or if the pile or overall body that is formed by said material is heterogeneous having dead spaces i.e. spaces wherein there is no material. Moreover, the tracks or vessels used during said conventional method may need to be thoroughly cleaned in between weighing different materials, especially if said different materials are of different nature or origin e.g. if a first material is a chemical product, a second material is a mineral, and a third material is of the agrifood sector. In addition, said conventional method is not particularly suitable for measuring in real time the total volume of a material in a storage facility, especially if in said material there is a frequent movement of materials in and out of said facility. All these drawbacks are particularly important considering the economic and reputational impact that is generated when the volume information produced by said conventional method is wrong or incomplete.

Therefore, there is a need for an apparatus and a method for measuring a volume of a piled material, that overcomes the drawbacks of the conventional ones.

### DESCRIPTION OF THE INVENTION

The present invention overcomes the drawbacks of conventional apparatuses and methods for measuring a volume of a piled material. In particular, the present invention allows for measuring the volume a piled material accurately and in a simple and easy to implement way. Moreover, the present invention may advantageously allow for measuring said volume in real time. Also, the present invention may advantageously allow for measuring said volume in an automatic way without requiring labor intensive processes, excessively high costs or complex facilities. Moreover, advantageously the present invention may allow for measuring the volume of different materials e.g. materials of different nature, or of different densities, or of materials comprising one, two or more components of different densities.

In a first aspect of the invention, an apparatus for measuring a volume of a piled material is provided. The apparatus comprises: a cable-driven robot which comprises a movable structure; a controller which is configured to control a movement and a positioning of the structure over an area according to scanning instructions; a LiDAR system which is attached to said structure and is configured to collect measurement data related to the piled material in said area; a processor operatively connected to the LiDAR system and to the controller for receiving therefrom, respectively, the measurement data and information related to the positioning of the structure. The processor is configured to calculate volume data concerning the volume of the piled material. The apparatus of the first aspect of the invention may alternatively be called system.

The LiDAR system of the apparatus of the first aspect of the invention may advantageously allow for capturing and collecting accurate data which can subsequently allow for calculating the volume of the pile material with a high accuracy. LiDAR, that is an acronym of "light detection and ranging" or "laser imaging, detection, and ranging", is a known technique for determining ranges by targeting an object or a surface with a laser and measuring the time for the reflected light to return to the receiver. A particularly popular variation of said technique is LiDAR scanning that can be applied for accurately measuring the positions (e.g. the coordinates) of points of the surface of an object or body that is scanned, and using the measured positions for making an accurate digital 3D-represention of said scanned object or body. Said digital 3D representation may in-turn be used for calculating the volume of the scanned body. Hence, it may be understood that the LiDAR system of the apparatus of the first aspect of the invention may advantageously allow for accurately mapping the surface of a body or mass, e.g. of a pile, mount or heap formed by the piled material, so that the collected data, e.g. the coordinates of points of the mapped surface, associated with said mapping can be used for calculating the volume of said body or mass. Hence, in a preferred embodiment, the LiDAR system is a LiDAR scanner. Said scanner may comprise optical, mechanical and electronic components. Also, said LiDAR system may be a LiDAR unit or module.

The cable-driven robot of the apparatus advantageously allows for moving the LiDAR system over the area. This can allow collecting data from different viewpoints above or around the piled material that may be located at said area. Hence, if the piled material forms mounds in said area, the cable-driven robot may advantageously move the LiDAR system about and/or around said mounds for accurately scanning or mapping the surface of said mounds. Moreover, the movability of the robot's movable structure to which the LiDAR system is attached, may advantageously enable avoiding having, in said area, "dark" points/regions i.e. regions or points not "visible" or observable by the LiDAR system. Moreover, the movability of the cable-driven robot and, hence, of the LiDAR system that is attached to the robot's movable structure, advantageously renders the system particularly suitable for monitoring in real time changes in the volume of the pile material. Hence, if the volume of the piled material is increased or reduced due to the deposition or removal, respectively, of some of the piled material, as it commonly happens in a warehouse, it may be possible to monitor the change, and the monitoring may involve or require moving the LiDAR system by means of the cable-driven robot. The use of the cable-driven robot advantageously allows for moving the LiDAR system over small or larger areas, and also, advantageously allows for installing and using the apparatus in a variety of different types of locations. Hence, the apparatus may for example be installed in a warehouse or an outdoors area or facility.

As can be understood, the movable structure of the cable-driven robot when the latter is installed, may be suspended and driven with the aid of cables which for this purpose may be anchored on fixed points, e.g. on pols or walls, located around, over or about the area in which the piled material is located. Hence, in a preferred embodiment, the movable structure is suspended by cables over said area. Said movable structure preferably is a platform which can facilitate easily and firmly loading and attaching thereon the LiDAR system. Hence, in a preferred embodiment the movable structure of the cable-driven robot is a movable platform.

Moreover, in a preferred embodiment the cable-driven robot or the latter's movable structure is suspended and driven by means of cables over a floor within a storage facility, preferably within a warehouse. It can be understood that the length of said cables may be chosen or adjusted depending on the size of the area or other factors, e.g. the design of the warehouse in the optional case that the cable-driven robot is installed in said warehouse. Preferably said cables may be driven by means of respective winches which can for example be located in specific locations around the area in which the piled material is located. Said winches may be considered as parts of the cable-driven robot, or of the overall apparatus comprising said cable-driven robot. Moreover, considering that a preferable use of the apparatus of the first aspect of the invention is for measuring the volume of stored grains, seeds, sand or other particulate or granular material, preferably the aforementioned winches may be protected by casings that prevent particles, grains or pieces of said material from contaminating and possibly damaging said winches. Accordingly, in a preferred embodiment the cable-driven robot comprises winches and casings for protecting the winches from contamination by the piled material.

It is noted that the use of the cable-driven robot as moving means for moving the LiDAR system about said area where the piled material may be located, may advantageously offer some unique advantages compared to other contemplated alternative moving means, such as a bridge crane or a drone that could be used for moving the LiDAR system. A drone, compared to a cable-driven robot, would be more difficult to navigate in warehouses and between the obstacles that are commonly found in warehouses where granular or particulate materials are stored. Moreover, said drone when flying could cause the dispersion and movement of said granular or particulate stored materials. Also, the use of a bridge crane within a warehouse requires the existence of a respective infostructure (e.g. a heavy metallic structure for supporting the bridge crane) which may not be possible to be installed without an official permit. Hence, not all warehouses have or can be equipped with a bridge crane. Compared to the case of the bridge crane, the installation of the cable-driven robot may advantageously be much easier, without requiring the existence of a heavy and complex infrastructure or special official permit. Moreover, the use of the cable-driven robot may advantageously allow for optionally moving the movable structure not only laterally, but also vertically, i.e. upwards and downwards, with respect to a floor on which the piled material may be located. Hence, the use of the cable-driven robot may allow for optionally moving the LiDAR system vertically for collecting data from different heights with respect to the piled material or said area or floor. Therefore, in a preferred embodiment the movable structure of the cable-driven robot is movable laterally and vertically over the area. Hence, in a preferred embodiment the controller is configured to control the movement of the movable structure such that said movement comprises a descent and/or an ascent over the area i.e. with respect to the piled material. This optional feature of moving the movable structure and the LiDAR system vertically may be particularly advantageous and useful when the piled material forms mounds having pics and valleys in between said pics, in which case it would be useful if the movable structure with the LiDAR attached to it can optionally descent over said valleys so that it can take more accurate measurements, or so that it can avoid having "dark" regions (i.e. regions not observable by the LiDAR system) of the pile material. When using a bridge crane, it may be particularly difficult to avoid having said "dark" regions, because the bridge crane is typically operated at a fixed height. Hence, the use of a bridge crane for moving the LiDAR system would not facilitate controllably moving the LiDAR system up and down over the piled material. Moreover the moving velocity of a bridge crane usually is not modifiable, and this does not allow for simultaneously moving the LiDAR system and changing the velocity (speed) at which the LiDAR system is moved. Changing said velocity may be required in the optional case that the LiDAR system is configured to collect the data or perform a scan during its movement. In such an optional case, if the piled material has zones from which a higher or lower density of data (e.g. data points) needs to be collected, it may be advantageous to be able to decrease or increase, respectively, the speed with which the movable platform and the attached thereat LiDAR system are moving while said data are collected. For this reason, in a preferred embodiment the LiDAR system is configured to collect the data or scan the piled material during the movement of the movable structure. Also, in a preferred embodiment, the controller is configured to modify a speed of the movement of the movable structure.

Also related to the apparatus' controller, in a preferred embodiment of the first aspect of the invention, the controller is configured to control the positioning of the structure such that the structure moves along a trajectory. Said trajectory may comprise a lateral and/or a vertical movement of the robot's movable structure over the area with the piled material, as mentioned further above, so that the LiDAR of the apparatus by moving together with the robot's movable structure along said trajectory can collect the required data so that the volume data can be subsequently calculated. The potential control of the positioning and movement of the structure such that the latter follows a particular trajectory may advantageously facilitate any of collecting data from specific regions of the area in which the piled material is located, or collecting data from a plurality of possible viewpoints above said area for avoiding having the mentioned further above "dark" points/regions, or moving the LiDAR system to locations which are potentially identifiable dynamically during the movement of the movable structure, or optimizing a scanning of said area or parts thereof by the LiDAR system for reducing the time required to complete said scanning. Moreover, before or during the movement of the structure, the controller may be configured to define or control the trajectory followed by the movable structure. For example, the controller may be able to dynamically modify said trajectory.

Accordingly, in some preferred embodiments wherein the controller is configured to control the structure's movement such that said structure moves along a trajectory, additionally the controller is configured to control the trajectory prior to the movement of the structure, and/or to dynamically control or modify said trajectory during the movement of the structure.

The controller of the apparatus may be part of the cable-driven robot. Hence, in a preferred embodiment, the cable-driven robot comprises the controller. Moreover, in a preferred embodiment the controller is attached to the movable structure. Alternatively, the controller may be separate from, but connectable to, the cable-driven robot. In the latter case the controller may be operationally connected with the cable-driven robot wirelessly or via wire. Said controller may be a standalone unit, or be a computer that comprises suitable hardware and software for communicating with and controlling the cable-driven robot, or comprise a computer card that is attachable to a computer, or have another form.

The controller allows for controlling the movement and the positioning of the robot's movable structure according to the scanning instructions. Hence, the movement of the LiDAR system which is attached to said movable structure may also be achieved so that the LiDAR system may be able to collect data from different locations with respect to the piled material, and/or to scan the surface of the piled material. It is noted that although the scanning instructions relate to the control of the position and movement of the movable structure and of the LiDAR system, optionally the controller is also configured to directly control the LiDAR system. In the latter optional case, the collection of the data by the LiDAR system may also be done according to said scanning instructions or a different set of instructions, e.g. some LiDAR control instructions. Hence, in a preferred embodiment, the controller is also configured to control the LiDAR system.

The controller may preferably comprise a memory, and the scanning instructions, or any other optional instructions (e.g. for optionally controlling the LiDAR system) may be stored in said memory. However, alternatively said scanning instructions may optionally be send to the controller by computing means which may optionally be included in the apparatus of the first aspect of the invention. Accordingly, in a preferred embodiment, the apparatus comprises computing means connectable to the controller and configured to communicate to the controller the scanning instructions. Moreover, also preferably, said computer means may be communicatively connectable to the processor and configured to receive from said processor the volume data. Said computing means may comprise one or more computers. Moreover, said computer means may be physically close to the controller and the processor and connected to them via a direct connection or a local network, or may be in a remote location and connected to the controller and the processor via a communications network or the internet. Hence, some preferred embodiments wherein the apparatus comprises said computer means, the latter is communicatively connected to the processor and to the controller wirelessly or via wire. It can be understood that the computer means and their communication with the apparatus' controller and the processor are optional features which may advantageously further promote the re-configurability, adaptability, automatization and control of the apparatus according to the type of the material, the size or shape of the area in which the piled material is located, any potential specific needs or requirements (e.g. resolution or level of accuracy) related to the data that must be collected or the volume data that must be calculated, or other factors. Moreover, in the optional case that the apparatus comprises computer means which can receive the calculated volume data, said computer means may further be used for processing, registering, visualizing, or disseminating said volume data.

As mentioned further above the volume data are calculated by the processor which for this purpose can receive the data collected by LiDAR system. For this purpose, the processor may be connected to the LiDAR system wirelessly or via wire. For advantageously facilitating the connectivity the LiDAR system with the processor, as well as for optimizing the compactness of the apparatus, preferably the processor is attached to the robot's movable structure. Said processor may be a central processing unit (CPU) which may be part of a computer or microcomputer a main function of which may be the calculation of the volume data. Hence, optionally the apparatus comprises a computer or microcomputer, which may be called "volume calculator" and is attached to the robot's movable structure (i.e. to the robot's movable platform), said computer or microcomputer comprising the processor and being configured to: communicate with the controller for receiving the information related to the structure's positioning; communicate with the LiDAR system for receiving the collected data; and calculate the volume data. Said optional volume calculator may further optionally be configured to communicate with the mentioned further above optional computing means which may preferably be used for providing the scanning instructions to the controller. Hence, in embodiments which comprise said computing means and said volume calculator, the latter may be configured to communicatively connect (e.g. wireless or via wire) to said computing means for sending to the latter the volume data.

The volume data calculated by the processor may comprise the total volume of the piled material or may comprise calculated volumes of different parts of the piled material. For example, if the piled material forms several mounds or piles, the LiDAR system may collect data concerning of said mounds or piles, and the processor may be able to use said data for calculating the volume of each one of the different mounds or piles. This may be a particularly useful optional feature in the case the apparatus is to be used in a warehouse where in different zones of the warehouse there are piled and stored different batches of the same or different materials. It is noted that the processor for the purpose of calculating said volume data may be able, e.g. may be programmed, to do a number of different types of calculations and use as input additional data. For example, for calculating the volume data, the processor may preferably first generate a digital 3D representation of the piled material, and/or may use as input, data related to the morphology of a surface or floor on which the piled material is located, or data related to the shape and structure of the facility (e.g a warehouse) at which the piled material may potentially be located.

In a second aspect of the invention, a method for measuring a volume of a piled material is provided, wherein the method comprises: according to scanning instructions a controller controlling a movement and a positioning of a movable structure about an area, wherein a cable-driven robot comprises the movable structure; a LiDAR system attached to said structure collecting measurement data related to the piled material in said area; a processor operatively connected to the LiDAR system and to the controller, receiving from the LiDAR system the measurement data and receiving from the controller information related to the positioning of the structure; the processor calculating volume data concerning the volume of the piled material. It can be understood that preferably the method of the second aspect of the invention may be implemented using, i.e. by means of, the apparatus of the first aspect of the invention.

A preferred embodiment of the method of the second aspect of the invention further comprises: computing means communicating to the controller the scanning instructions, wherein said computing means is communicatively connectable to the processor and to the controller; and, the computing means receiving from the processor the volume data.

A method described above the present invention is particularly suitable for measuring the volume of particulate or grainy stored materials. Hence, in a preferred embodiment of the invention, the piled material is any of a granular or a particulate store material. Also, in a preferred embodiment, said material forms one or more piles, mounds, or heaps in the area at which the material is piled or stored. Moreover, in a preferred embodiment of the invention, the piled material comprises any of a granular material, a particulate material, grains, beans, seeds, particles, sand, pebbles, stones or scrap.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a preferred embodiment of an apparatus according to the invention.
Fig. 2 illustrates a preferred embodiment of an apparatus according to the invention.
Fig. 3 illustrate a flow diagram of preferred embodiment of a method according to the invention.
Fig. 4 illustrates a flow diagram of preferred embodiment of a method according to the invention.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and methods according to the invention.

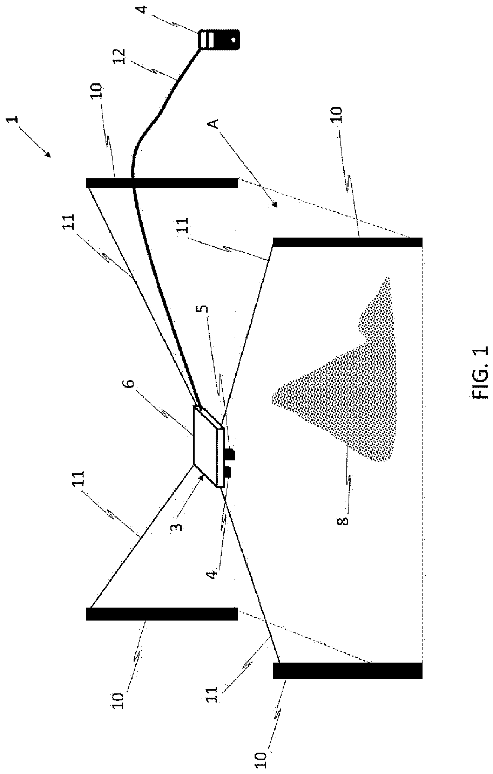

A preferred embodiment of an apparatus according to the first aspect of the invention is explained next with reference to Fig. 1. The apparatus 1 of Fig. 1 comprises a cable-driven robot 3, a controller 4, a LiDAR system 5 and a processor which is not shown in Fig. 1. The cable-driven robot 3 comprises a movable structure 6 that is a platform. The controller 4 is configured to control a movement and a positioning of the platform 6 over an area A according to scanning instructions. The LiDAR system 5 is attached to the robot's platform 6 and is configured to collect measurement data related to the piled material 8 in said area A. The dashed lines in Fig. 1 indicate the borders of said area A. In said area A there is the piled material 8. The processor of the apparatus 1 of Fig. 1, is operatively connected to the LiDAR system 5, and is also operatively connected to the controller. Hence, the processor can receive the measurement data from the LiDAR system 5, and can also receive, from the controller 4, information related to the positioning of the structure/platform 6. Said information may comprise position coordinates and speed values. Also, the processor is configured to calculate volume data concerning the volume of the piled material 8. For calculating said volume data the processor may use the information and the data it receives from the LiDAR system 5 and the controller 4, respectively.

Also, in the embodiment of Fig. 1, the robot's structure 6 (i.e. the robot's platform) is suspended over said area A by cables 11 which are supported by poles 10. At the bases of said poles there can be installed winches (not shown) for driving the cables 11 and the platform/movable structure 6 of the cable-driven robot 3. It is contemplated that when the apparatus comprises winches located close to the piled material, and said piled material is granular or particulate, it is preferable if the winches are within casings for protecting the winches from contamination from the piled material. Also, In the embodiment of Fig. 1 the controller 4 is communicatively connected to the cable-driven robot 3 via a wire 12, for controlling the movement and positioning of the cable-driven robot. Alternatively, the controller 4 may be connected to the cable-driven robot 3 via a wireless connection, and/or via a network. In a preferred embodiment, the controller is part of the cable-driven robot.

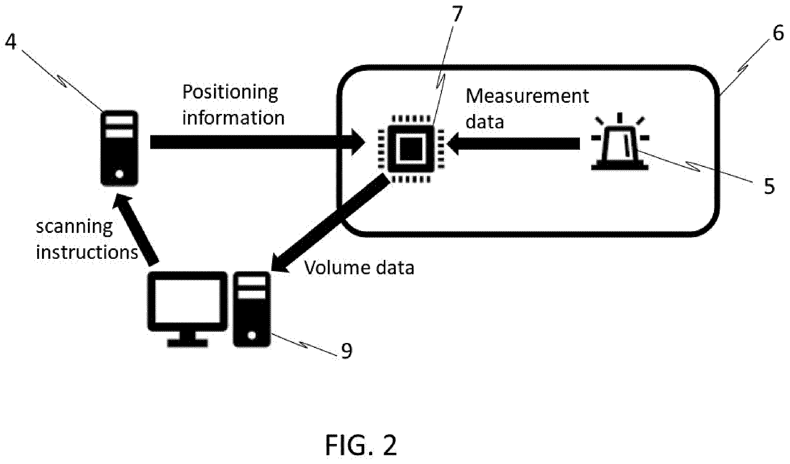

The embodiment of Fig. 2 is similar to the embodiment of Fig. 1. Also, in the embodiment of Fig. 2 the processor 7, which calculates the volume data, is attached to the robot's platform 6. The embodiment of Fig. 2 further comprises computing means 9 which is a computer communicatively connectable to the processor 7 and to the controller 4. The computer means 9 of the embodiment of Fig. 2 is configured to receive from the processor 7 the volume data, and to communicate to the controller 4 the scanning instructions.

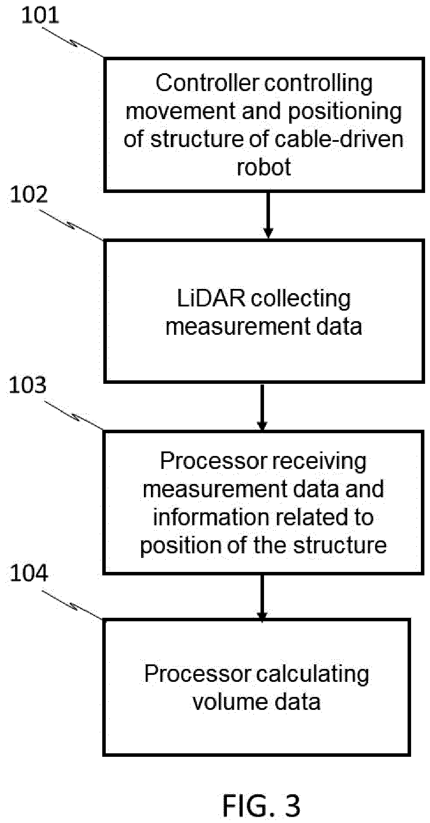

A preferred embodiment of a method according to the second aspect of the invention is explained next with reference to Fig. 3. The method of Fig. 3 comprises the following:
in step 101, according to scanning instructions a controller controlling a movement and a positioning of a movable structure about an area, wherein a cable-driven robot comprises the movable structure;
in step 102, a LiDAR system attached to said structure collecting measurement data related to the piled material in said area;
in step 103, a processor operatively connected to the LiDAR system and to the controller, receiving from the LiDAR system the measurement data and receiving from the controller information related to the positioning of the structure;
in step 104, the processor calculating volume data concerning the volume of the piled material.

The embodiment of the method of Fig. 3 may be implemented using (i.e. via or by means of) the embodiment of Fig. 1 or Fig. 2. Hence, a preferred embodiment of the method according to the second aspect of the invention also comprises providing an apparatus according to the first aspect of the invention.

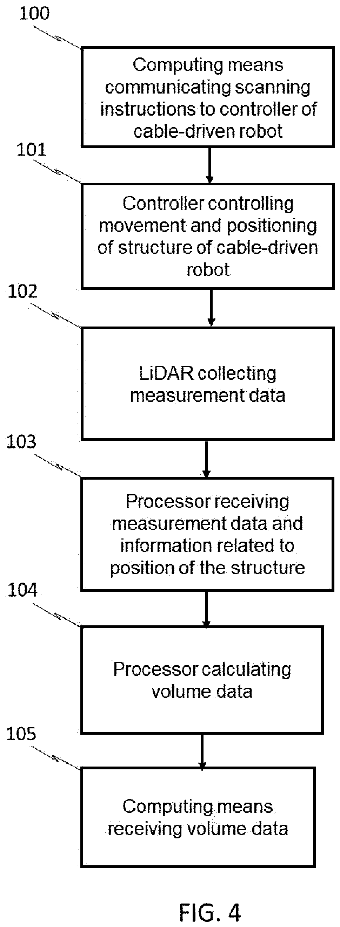

Fig. 4 illustrates a very preferred embodiment of the method of the second aspect of the invention. The embodiment of Fig. 4 can be implemented using the apparatus of Fig. 2. The method illustrated by Fig. 4, comprises the steps shown in Fig. 3, and further comprises:
in step 100, computing means communicating to the controller the scanning instructions, wherein said computing means is communicatively connectable to the processor (7) and to the controller; and,
in step 105, the computing means receiving from the processor the volume data.

It is noted that, as is illustrated by Fig. 4, step 100 may be implemented before step 101, and step 105 may be implemented after step 104.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An apparatus for measuring a volume of a piled material (8), the apparatus comprising:
a cable-driven robot (3) which comprises a movable structure (6);
a controller (4) which is configured to control a movement and a positioning of the structure (6) over an area (A) according to scanning instructions;
a LiDAR system (5) which is attached to said structure (6) and is configured to collect measurement data related to the piled material (8) in said area (A);
a processor (7) operatively connected to the LiDAR system (5) and to the controller (4) for receiving therefrom, respectively, the measurement data and information related to the positioning of the structure (6), and the processor (7) is configured to calculate volume data concerning the volume of the piled material (8).

2. An apparatus according to claim 1, further comprising computing means (9) that is communicatively connectable to the processor (7) and to the controller (4), and the computing means (9) is configured to receive from the processor (7) the volume data, and to communicate to the controller (4) the scanning instructions.

3. An apparatus according to claim 2, wherein the computer means (9) is communicatively connected to the processor (7) and to the controller (4) wirelessly or via wire.

4. An apparatus according to any of the previous claims, wherein the cable-driven robot comprises the controller (4), and/or the controller (4) is attached to the structure (6).

5. An apparatus according to any of the previous claims, wherein the controller is configured to control the movement of the movable structure such that said movement comprises a descent and/or an ascent over the area.

6. An apparatus according to any of the previous claims, wherein the controller (4) is configured to control the positioning of the structure (6) such that the structure (6) moves along a trajectory.

7. An apparatus according to claim 6, wherein the controller (4) is configured to control the trajectory prior to the movement of the structure (6), and/or to dynamically control or modify said trajectory during the movement of the structure (6).

8. An apparatus according to any of the previous claims, wherein the cable-driven robot (3) comprises winches and casings for protecting the winches from contamination by the piled material (8).

9. An apparatus according to any of the previous claims, wherein the processor (7) is attached to the structure (6).

10. An apparatus according to any of the previous claims, wherein:
the LiDAR system is configured to collect the data or scan the piled material during the movement of the movable structure; and/or
the controller is configured to modify a speed of the movement of the movable structure.

11. A method for measuring a volume of a piled material (8), comprising:
according to scanning instructions a controller (4) controlling a movement and a positioning of a movable structure (6) about an area (A), wherein a cable-driven robot (3) comprises the movable structure (6);
a LiDAR system (5) attached to said structure (6) collecting measurement data related to the piled material (8) in said area (A);
a processor (7) operatively connected to the LiDAR system (5) and to the controller (4), receiving from the LiDAR system (5) the measurement data and receiving from the controller (4) information related to the positioning of the structure (6);
the processor (7) calculating volume data concerning the volume of the piled material (8).

12. A method according to claim 11, further comprising:
computing means (9) communicating to the controller (4) the scanning instructions, wherein said computing means (9) is communicatively connectable to the processor (7) and to the controller (4); and,
the computing means (9) receiving from the processor (7) the volume data.

13. A method according to any of claims 11-12, wherein the piled material (8) comprises any of granular material, a particulate material, grains, beans, seeds, particles, sand, pebbles, stones or scrap.

14. A method according to any of claims 11-13, wherein the cable-driven robot (3) is suspended and driven by means of cables (11) over a floor within a storage facility, preferably within a warehouse.

15. A method according to any of claims 11-14, wherein the piled material (8) forms one or more piles, mounds, or heaps in said area (A).
